# EUROPÄISCHE PATENTSCHRIFT

(11) **EP 1 378 778 B1**
(45) Veröffentlichungstag und Bekanntmachung des Hinweises auf die Patenterteilung: **17.01.2007**
(21) Anmeldenummer: 02014708.8
(22) Anmeldetag: 03.07.2002
(51) Int. Cl.: G02B 6/44

(54) **Schutzummantelung eines Glasfaserkabels für Laseranwendungen**
Protection hose of an optical fiber cable for laser applications
Gaine de protection d'un câble à fibres optiques pour application laser

(43) Veröffentlichungstag der Anmeldung: 07.01.2004
(73) Patentinhaber: Witzenmann GmbH, 75175 Pforzheim (DE)
(72) Erfinder: Rink, Matthias, 75245 Neulingen (DE)
(74) Vertreter: Blumenröhr, Dietrich

(56) Entgegenhaltungen:
- EP-A- 0 006 364
- EP-A- 0 320 108
- DE-A- 2 800 123
- DE-A- 2 912 086
- DE-U- 29 822 117
- US-A- 6 028 975
- PATENT ABSTRACTS OF JAPAN vol. 009, no. 203 (P-381), 21. August 1985 (1985-08-21) & JP 60 066219 A (OLYMPUS KOGAKU KOGYO KK), 16. April 1985 (1985-04-16)
- PATENT ABSTRACTS OF JAPAN vol. 008, no. 175 (P-294), 11. August 1984 (1984-08-11) & JP 59 068701 A (FUJIKURA DENSEN KK), 18. April 1984 (1984-04-18)

## Beschreibung

Die Erfindung betrifft ein Lichtleitkabel mit den Merkmalen des Oberbegriffs des Anspruches 1.

Bereits bekannte Lichtleitkabel sind beispielsweise in der DE 29 12 086 und der EP-A-0006364 offenbart.

Jedem einzelnen und insbesondere der Kombination aus beiden Schutzschläuchen kommt hierbei die Aufgabe zu, Beschädigungen und insbesondere ein Brechen der Lichtleiter vor allem bei Zug, Druck-, Torsions-, Temperatur- und Biegebeanspruchung zu verhindern. Neben dieser Schutzfunktion müssen die Schutzschläuche aber auch hochflexibel und sehr gut biegbar sein, um die Handhabung der damit ausgestatteten Lichtleitkabel nicht zu beeinträchtigen. Denn Lichtleitkabel werden beim eingangs genannten Beispiel der Laseranlagen etwa bei Schweißrobotern eingesetzt, die beim Herstellen der Laserschweißnaht sehr große und sehr schnelle Bewegungen durchführen, denen die Lichtleitkabel entsprechend folgen müssen.

Bisherige Lichtleitkabel weisen neben den beiden Schutzschläuchen, die jeweils insbesondere aus einer Metallwendel hergestellt sind, zusätzlich zwischen dem inneren und dem äußeren Schutzschlauch eine isolierte Litze auf, zwischen der und dem inneren Schutzschlauch ein erster elektrischer Sicherheitskreis ("Sicherheitskreis 1 ") geschaltet ist; der Stromkreis innerhalb dieses Sicherheitskreises wird im Fall eines Bruches des Lichtleiters bzw. anderer größerer Schäden, bei denen der innere Schutzschlauch durch die Energie des Lichtstrahls zerstört wird, unterbrochen und der Laser zur Vermeidung weiterer Zerstörungen abgeschaltet.

Ein zweiter elektrischer Sicherheitskreis ("Sicherheitskreis 2") ist zusätzlich zwischen innerem und äußerem Schutzschlauch schaltbar, um im Falle kleinerer Schäden des Lichtleiters, die nicht zur Zerstörung des inneren Schutzschlauches, sondern nur zu einer Erwärmung einer zwischen innerem und äußerem Schutzschlauch vorgesehenen Kunststoffbeschichtung und damit zu einer Reduzierung des spezifischen Widerstandes zwischen innerem und äußerem Schutzschlauch führen, den Laser aufgrund des veränderten Widerstandes abzuschalten.

Nachteilig an dem die Litze verwendenden Sicherheitskreis ist zum einen das aufwendige Integrieren der Litze in das Lichtleitkabel: Der mit dem Lichtleiter versehene innere Schutzschlauch wird zusammen mit der Litze in den äußeren Schutzschlauch eingesteckt, wobei dieses nachträgliche Einziehen der inneren Komponenten in den äußeren Schutzschlauch im Gegensatz zu einer normalen von innen nach außen durchgeführten kontinuierlichen Produktionsabfolge sehr umständlich ist. Außerdem begrenzt das nachträgliche Einziehen der inneren Komponenten in den äußeren Schutzschlauch auch die maximale Länge der Lichtleitkabel. Zum anderen besteht aber auch ein Nachteil der Litze in der außermittigen Position in nur einem einzigen Umfangsbereich des inneren Schutzschlauchs, wodurch die Antwortzeiten des zugehörigen Sicherheitskreises je nach Umfangsposition der Beschädigung variieren.

Zwischen innerem und äußerem Schutzschlauch ist - gegebenenfalls unter Zwischenfügung weiterer Lagen wie beispielsweise einer Kunststoffumhüllung - ein insbesondere die Litze des Standes der Technik ersetzender innerer Geflechtsschlauch aus sich kreuzenden Metalldrähten angeordnet. Der innere Geflechtsschlauchs kann dabei in einem kontinuierlichen Herstellungsverfahren auf den inneren Schutzschlauch aufgebracht werden und der äußere Schutzschlauch kann direkt auf diesen Geflechtsschlauch der äußere Schutzschlauch aufgewickelt werden. Hiervon ausgehend liegt der vorliegenden Erfindung die Aufgabe zugrunde, ein Lichtleitkabel der eingangs genannten Art zur Verfügung zu stellen, das sich unter Vermeidung der geschilderten Nachteile des Standes der Technik durch eine einfache Herstellbarkeit und eine verbesserte Funktion der Sicherheitskreise auszeichnet, ohne jedoch die mechanischen Eigenschaften des bekannten Lichtleitkabels zu verschlechtern. Diese Aufgabe wird erfindungsgemäß durch die Merkmale des kennzeichnenden Teils des Anspruches 1 gelöst. Indem der gleichmäßig über den gesamten Umfang des inneren Schutzschlauchs verteilt angeordnete innere Geflechtsschlauch die außermittig angeordnete Litze ersetzt, verbessert er das Antwortverhalten des nun zwischen innerem Schutzschlauch und innerem Geflechtsschlauch geschalteten Sicherheitskreises 2. Des weiteren lässt sich in kontinuierlicher Art und Weise Schicht für Schicht das Lichtleitkabel von innen nach außen aufbauen, ohne nachträglich irgendwelche Komponenten in umständlicher Art und Weise einziehen zu müssen. War für dieses nachträgliche Einziehen ein gewisses Spiel zwischen innerem und äußerem Schutzschlauch erforderlich, so können diese beiden Bauteile nun näher aneinander angeordnet werden. Darüber hinaus sorgte beim Stand der Technik die außermittig angeordnete Litze auch für eine gewisse Asymmetrie des äußeren Schutzschlauches gegenüber dem inneren Schutzschlauch, welche aufgrund der hierdurch sich über den Umfang verändernden Widerstände zu umfangsabhängigen Antwortzeiten des zugehörigen Sicherheitskreises führte.

Weiterhin bestehen innerer und äußerer Schutzschlauch aus einer Metallwendel aus einem glatten Flachbandmaterial und insbesondere der innere Schutzschlauch aus Messing, so dass ein zwischen dem inneren Schutzschlauch und dem äußeren Geflechtsschlauch geschalteter elektrischer Sicherheitskreis 1 eine Beschädigung des Lichtleiters messen kann, die aufgrund der großen Energie insbesondere zu einer Zerstörung des inneren Schutzschlauchs, also der Messingwendel führt. Die beiden Schutzschläuche sind zur Stabilisierung des Lichtleitkabels und zur Vermeidung von Torsionseffekten aus zueinander gegenläufig gewickelten Wendeln hergestellt.

Insgesamt wird somit nicht nur der Aufbau des Lichtleitkabels, sondern vor allem auch die Schaltung der beiden Sicherheitskreise 1 und 2 verändert und hierdurch verbessert: Für den Sicherheitskreis 2, der eine Änderung des Durchgangswiderstandes der Beschichtung des inneren Schutzschlauches misst, ist die örtliche Nähe zum inneren Schutzschlauch und ein umfangsunabhängiges Erfassen der Messwerte wesentlich und damit die Verwendung des inneren Geflechtsschlauchs hierzu von ganz großem Vorteil. Im Gegensatz dazu kann der Sicherheitskreis 1, der nur auf ein Unterbrechen des Stromflusses infolge einer Zerstörung des inneren Schutzschlauches reagieren muss, problemlos mit einem größeren Abstand gegenüber dem inneren Schutzschlauch als beim Stand der Technik auskommen, ist also die Schaltung zwischen innerem Schutzschlauch und äußerem Geflechtsschlauch ganz ohne Nachteil in Bezug auf die Funktion des Sicherheitskreises 1.

Insbesondere zur Stabilisierung und Abdichtung des inneren Schutzschlauchs sowie zur elektrischen Isolierung gegenüber dem inneren Geflechtsschlauch empfiehlt es sich, zwischen dem inneren Schutzschlauch und dem inneren Geflechtsschlauch eine auf den inneren Schutzschlauch aufgebrachte Kunststoffumhüllung anzuordnen, die beispielsweise aus einer PVC-Beschichtung bestehen kann. Diese Kunststoffbeschichtung bzw. PVC-Beschichtung stellt den Widerstand dar, der von dem zwischen dem inneren Schutzschlauch und dem inneren Geflechtsschlauch geschalteten Sicherheitskreis überwacht wird. Bei leichten Beschädigungen des Lichtleiters erwärmt sich diese Kunststoffumhüllung und erhält hierdurch einen reduzierten spezifischen Widerstand.

Um auch den äußeren Schutzschlauch zu stabilisieren, wird zweckmäßigerweise auf den äußeren Schutzschlauch ein äußerer Geflechtsschlauch aus sich kreuzenden Metalldrähten und gegebenenfalls eine weitere Kunststoffumhüllung - beispielsweise in Form einer PVC-Beschichtung - aufgebracht. Zwischen diesem äußeren Geflechtsschlauch und dem inneren Schutzschlauch kann dann ein weiterer elektrischer Sicherheitskreis geschaltet werden, der bei Zerstörung des Lichtleiters auf eine hiermit verbundene Zerstörung des inneren Schutzschlauchs antwortet und die Laseranlage abschaltet.

Darüber hinaus empfiehlt es sich, zwischen innerem Geflechtsschlauch und äußerem Schutzschlauch eine weitere, beide Komponenten gegeneinander isolierende Kunststoffumhüllung, insbesondere eine PVC-Beschichtung, anzuordnen.

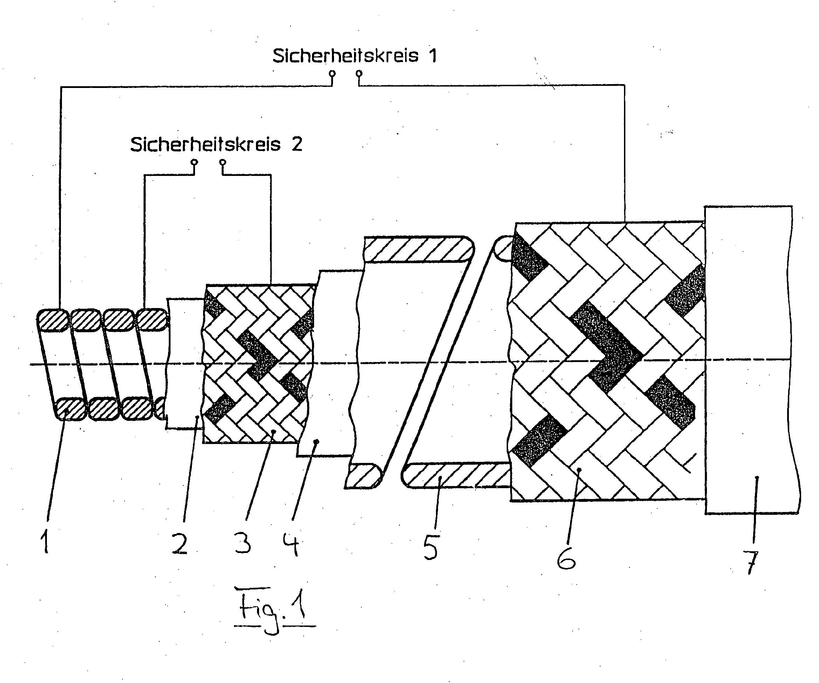

Weitere Merkmale und Vorteile der vorliegenden Erfindung ergeben sich aus der nachfolgenden Beschreibung eines Ausführungsbeispiels anhand der Zeichnung; diese zeigt in Figur 1 ein erfindungsgemäßes Lichtleitkabel, welches aus einer (nicht dargestellten und) als Lichtleiter fungierenden Glasfaser besteht, einem die Glasfaser umgebenden inneren Schutzschlauch 1 mit einer PVC-Beschichtung 2, einem auf die PVC-Beschichtung aufgebrachten inneren Geflechtsschlauch 3 mit PVC-Beschichtung 4, einem äußeren Schutzschlauch 5 und einem hierauf aufgebrachten äußeren Geflechtsschlauch 6 mit PVC-Beschichtung 7. Beim Stand der Technik waren innerer Schutzschlauch 1 und PVC-Beschichtung 2 das erste vorkonfektionierte Bauteil und der äußere Schutzschlauch 5, der äußere Geflechtsschlauch 6 und die zugehörige PVC-Beschichtung 7 das zweite vorkonfektionierte Bauteil, wobei dann beide Bauteile unter Zwischenfügung einer Litze ineinander gesteckt werden mussten.

Der vorliegende erfindungsgemäße Aufbau des Lichtleitkabels ermöglicht es nun, von innen nach außen die jeweiligen Komponenten kontinuierlich und spielfrei aufeinander aufzubringen, was zum einen den Herstellungsablauf vereinfacht und zum anderen eine Herstellung des Lichtleitkabels mit nahezu beliebigen Längen ermöglicht.

Darüber hinaus sorgt der die Litze ersetzende innere Geflechtsschlauch 3 für eine gleichmäßige und kontinuierliche Erfassung des Umfangs des inneren Schutzschlauches 1 bzw. des Widerstandes der PVC-Beschichtung 2 zwischen innerem Geflechtsschlauch 3 und innerem Schutzschlauch 1 und somit des Sicherheitskreises 2, der zwischen innerem Schutzschlauch 1 und innerem Geflechtsschlauch 3 geschaltet ist.

## Patentansprüche

1. Lichtleitkabel insbesondere für Laseranlagen, bestehend aus einem Lichtleiter, einem den Lichtleiter zumindest mittelbar umgebenden inneren Schutzschlauch (1) sowie einem weiteren, den inneren Schutzschlauch zumindest mittelbar umgebenden äußeren Schutzschlauch (5) und einem elektrischen Sicherheitskreis, **dadurch gekennzeichnet, daß** zwischen innerem und äußerem Schutzschlauch ein innerer Geflechtsschlauch (3) aus sich kreuzenden Metalldrähten angeordnet ist,
und dass der elektrische Sicherheitskreis zwischen dem inneren Schutzschlauch (1) und dem inneren Geflechtsschlauch (3) geschaltet ist, durch den eine Beschädigung des Lichtleiters und/oder einzelner Komponenten des Lichtleitkabels ermittelbar ist, und dass die Schutzschläuche aus einer Metallwendel bestehen.

2. Lichtleitkabel nach zumindest Anspruch 1,
**dadurch gekennzeichnet,**
**dass** zwischen dem inneren Schutzschlauch (1) und dem inneren Geflechtsschlauch (3) eine auf den inneren Schutzschlauch (1) aufgebrachte Kunststoffumhüllung (2) angeordnet ist.

3. Lichtleitkabel nach zumindest einem der vorstehenden Ansprüche,
**dadurch gekennzeichnet,**
**dass** auf den äußeren Schutzschlauch (5) ein äußerer Geflechtsschlauch (6) aus sich kreuzenden Metalldrähten aufgebracht ist.

4. Lichtleitkabel nach zumindest Anspruch 3,
**dadurch gekennzeichnet,**
**dass** zwischen innerem Schutzschlauch (1) und äußerem Geflechtsschlauch (6) ein zweiter elektrischer Sicherheitskreis geschaltet ist, durch den eine Beschädigung des Lichtleiters und/oder einzelner Komponenten des Lichtleitkabels ermittelbar ist.

5. Lichtleitkabel nach zumindest einem der vorstehenden Ansprüche,
**dadurch gekennzeichnet,**
**dass** zwischen innerem Geflechtsschlauch (3) und äußerem Schutzschlauch (5) eine auf den inneren Geflechtsschlauch aufgebrachte Kunststoffumhüllung (4) angeordnet ist.

## Claims

1. Fibre-optic cable, in particular for laser systems, comprising an optical fibre, an inner protective sleeve (1) which at least indirectly surrounds the optical fibre as well as a further, outer protective sleeve (5) which at least indirectly surrounds the inner protective sleeve and an electric safety circuit, **characterised in that** an inner braided sleeve (3) made from intersecting metal wires is disposed between the inner and outer protective sleeves, and that the electric safety circuit by means of which any damage to the optical fibre and/or to individual components of the fibre-optic cable can be detected is connected between the inner protective sleeve (1) and the inner braided sleeve (3), and that the protective sleeves consist of metal coils.

2. Fibre-optic cable as claimed in at least Claim 1, **characterised in that** a plastic sheathing (2) applied to the inner protective sleeve (1) is disposed between the inner protective sleeve (1) and the inner braided sleeve (3).

3. Fibre-optic cable as claimed in at least one of the preceding claims, **characterised in that** an outer braided sleeve (6) composed of intersecting metal wires is applied to the outer protective sleeve (5).

4. Fibre-optic cable as claimed in at least Claim 3, **characterised in that** a second electric safety circuit by means of which any damage to the optical fibre and/or to individual components of the fibre-optic cable can be detected is connected between the inner protective sleeve (1) and the outer braided sleeve (6).

5. Fibre-optic cable as claimed in at least one of the preceding claims, **characterised in that** a plastic sheathing (4) applied to the inner braided sleeve is disposed between the inner braided sleeve (3) and the outer protective sleeve (5).

## Revendications

1. Câble à fibre optique en particulier pour installations laser, composé d'une fibre optique, d'une gaine de protection intérieure (1) entourant la fibre optique au moins indirectement ainsi que d'une autre gaine de protection extérieure (5) entourant la gaine de protection intérieure au moins indirectement et d'un circuit de sécurité électrique, **caractérisé par le fait**
**qu'**une gaine tressée intérieure (3) formée de fils métalliques entrecroisés est disposée entre les gaines de protection intérieure et extérieure
et **que** le circuit de sécurité électrique est branché entre la gaine de protection intérieure (1) et la gaine tressée intérieure (3), au moyen duquel une détérioration de la fibre optique et/ou de certains composants du câble à fibre optique est déterminable, et que les gaines de protection sont composés d'une spirale métallique.

2. Câble à fibre optique selon au moins la revendication 1,
**caractérisé par le fait**
**qu'**une gaine en matière plastique (2) montée sur la gaine de protection intérieure (1) est disposée entre la gaine de protection intérieure (1) et la gaine tressée intérieure (3).

3. Câble à fibre optique selon au moins l'une des revendications précédentes,
**caractérisé par le fait**
**qu'**une gaine tressée extérieure (6) formée de fils métalliques entrecroisés est montée sur la gaine de protection extérieure (5).

4. Câble à fibre optique selon au moins la revendication 3,
**caractérisé par le fait**
**qu'**un deuxième circuit de sécurité électrique est branché entre la gaine de protection intérieure (1) et la gaine tressée extérieure (6), au moyen duquel une détérioration de la fibre optique et/ou de certains composants du câble à fibre optique est déterminable.

5. Câble à fibre optique selon au moins l'une des revendications précédentes,
**caractérisé par le fait**
**qu'**une gaine en matière plastique (4) montée sur la gaine tressée intérieure est disposée entre la gaine tressée intérieure (3) et la gaine de protection extérieure (5).
